# EUROPEAN PATENT SPECIFICATION

(11) **EP 3 230 162 B1**
(45) Date of publication and mention of the grant of the patent: **29.06.2022**
(21) Application number: 15813121.9
(22) Date of filing: 10.12.2015
(51) Int. Cl.: B64D 11/00

(54) **RETRACTABLE DEVICE HOLDER FOR AN AIRCRAFT SEAT**
EINZIEHBARER VORRICHTUNGSHALTER FÜR EINEN FLUGZEUGSITZ
SUPPORT DE DISPOSITIF RÉTRACTABLE POUR SIÈGE D'AÉRONEF

(30) Priority: 10.12.2014 US 201462090189 P
(43) Date of publication of application: 18.10.2017
(73) Proprietor: Zodiac Seats France, 36100 Issoudun (FR)
(72) Inventor: DOS SANTOS, Fernando, 36100 Issoudun (FR)
(74) Representative: Marconnet, Sébastien
(86) International application number: PCT/IB2015/059528
(87) International publication number: WO 2016/092509

(56) References cited:
- WO-A1-2011/092348
- WO-A1-2013/126421
- WO-A2-2006/052297
- GB-A- 2 524 132
- US-A1- 2005 140 191
- US-A1- 2007 096 517
- US-A1- 2009 089 841
- US-A1- 2013 242 523

## Description

### CROSS REFERENCE TO RELATED APPLICATIONS

This application is related to and claims priority benefits from U.S. Provisional Application Serial No. 62/090189 ("the '189 application"), filed on December 10, 2014, entitled Retractable Device Holder for an Aircraft Seat.

### FIELD OF THE INVENTION

The field of the invention relates to retractable portable display device holding assemblies for use with passenger seats or the like.

### BACKGROUND

In many instances, passenger vehicles, such as aircraft, buses, trains, ships, and automobiles, include passenger seats with a wide assortment of portable electronic and entertainment options to encourage passengers to remain seated as much as possible during transport for safety, crew mobility, and to enable efficient cabin service. Some passenger seats may provide video and audio entertainment, including television, video games, internet access, and other on-board entertainment ("OBE") or in-flight entertainment ("IFE") components. Typically, these entertainment devices are mounted in the seat backs and arm rests of the passenger seats. A part of these systems commonly involves a screen, as a visual and/or touch interface, usually located in the back of the seat located before the passengers, and commonly located at an angle and position ideal for the passenger to watch the video screen while seated.

Recently, improvements in other devices such as tablets and smartphones have increased the use of these other devices during flight. With the advent of portable electronic devices ("PEDs"), such as tablet computers, cell phones, smart phones, handheld video game systems, personal digital assistants, palmtop computers, DVD players, data and audio-video media, multi-media enabled devices, and other similar electronic devices, many passengers prefer to use their own PEDs, rather than the OBE or IFE components that are mounted in the passenger seats. The rate at which PEDs, namely cell phones, portable computers, personal digital assistants ("PDAs"), have been evolving has been exponential. These devices are constantly increasing in functions and decreasing/altering in size, making them more portable and at the same time able to perform more tasks. This evolution has led to passengers carrying their personal information and media on these devices with the expectation of using them while traveling. Some systems have been developed to enable the use of PEDs in conjunction with a seat back, such as those described in PCT Application Number PCT/US2014/047436 (the '436 Application) filed on Jul 21, 2014, entitled, "Adjustable Support Assemblies For Portable Electronic Devices." However, there remains a need for a support system that accommodates existing IFE systems for passengers that do not employ their own PED's.

In order to view such devices, passengers must currently hold the devices, use third-party device holders, or prop the devices on the tray tables, but it is difficult to position the devices at a proper viewing angle. Integrated solutions should accommodate aircraft seat design, which requires that space in front of the passenger be clear of potentially injurious objects and sharp edges. The general goal is to prevent the head trajectory of a passenger, in the case of crash, from contacting any sharp or protruding edges. As a result, there is a need for a support system for PEDs that is always available and adaptable to a wide range of PED sizes, shapes, and thicknesses. There is also a need for a support system that does not create the need for an extra coupling assembly. There is also a need for a support system that does not pose a safety hazard to passengers. There is also a need for a support system that accommodates a suitable viewing angle, or that can accommodate adjustments to a viewing angle for the comfort of a passenger.

Document WO2013/126421 describes personal electronics device mounting structures including a base with an aft surface, wherein the base is configured to fit substantially within a recess so that the aft surface of the base is substantially flush with an aft surface surrounding the recess in a stowed position. A cradle coupled to the base comprises a pair of arms configured to hold a personal electronics device securely in place adjacent a passenger seat back when the base is in the deployed position.

Document US2009/089841 describes a seat-mounted electronics assembly for a vehicle including a seat with a back portion and a rear surface. A display panel having a screen mounted on a screen-side and a mounting assembly mounting the display panel on the rear surface. The mounting assembly allows pivotal movement of the display panel relative to the seat between a stowed position and at least one viewing position so that when the display panel is in the viewing position, the display panel is located higher than when the display panel is in the stowed position.

Document WO2011/092348 describes a device for attaching a tablet computer, in particular to the rear-side of a motor vehicle seat such as a back rest, head rest, or head rest mounting of a vehicle seat. The device comprises a fastening device for attaching the device to the vehicle seat part and a carrier element which is displacably connected to the fastening device.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim. The invention is defined by the scope of the claims hereafter.

According to certain embodiments of the present disclosure, a system for holding a display device can be configured to connect with the back of a seat. In some cases, a system for holding a display device can be configured to connect with a structure attached with the back of a seat. For example, a system for holding a display device can include a device holder connectible with an IFE system or components of an IFE system, such as with a video screen or video system. A device holder may be connectible with video system via a support structure, and in some cases may be configured to support a display device in a display position. For example, a device holder may be configured to hold a display device in front of a video system. The device holder can be stowed in a stowed position or deployed in a deployed position.

When in the stowed position, the support structure and the device holder can be at least partially hidden behind the video system. Also within the stowed position, the support structure and the device holder may be arranged in a stowage space. For example, a stowage space can include a cavity in a seat back. In some embodiments, when the device holder is in the stowed position, the device holder may be tucked into the stowage space such that the device holder does not protrude, or only minimally intrudes, into a passenger space. When in the deployed position, the device holder may be arranged in front of the video system and configured to hold a display device, for example a tablet computer, for viewing by a user.

According to the invention, a device holder does include a front support element and a rear support element that provide a space between the rear and front elements into which a display device, for example a smartphone or tablet, can be positioned. The device holder may further include a spring and a spring sliding assembly operably connecting the rear and front support elements, allowing the rear and front support elements to separate and retract with respect to each other. This allows the rear and front support elements to act as a clip in order to secure a display device. In accordance with the invention, the device holder further includes a support structure, which may include hinge and a sliding assembly connecting the device holder with aspects of the environment. For example, the device holder may be connected with features such as with a back of an IFE system such as a video screen, a support for an IFE system, or with a seat back. The position of the device holder may be adjustable via the support structure. For example, the device holder can have a deployed position, wherein the front and rear support elements are positioned in front of aspects of the environment, such as in front of a video screen in a seat back, such that the device holder can hold a display device in front of the video screen. By positioning a display device in front of a video screen, the system can provide a suitable viewing angle to a passenger. The device may also have a stowed position, wherein the front and rear support elements can rotate down via the hinge, and the hinge and front and rear support elements may be slid upward into a stowage space behind aspects of the environment, such as behind an IFE system or video screen. In some embodiments, the stowed position can provide that the device holder is tucked out of the way of passengers and does not protrude into a space in front of a passenger where the device holder might otherwise pose a safety hazard.

According to the invention, there is provided a device holder that can include a supporting structure configured to connect with a back of a video system of a seat back, and a pair of supporting surfaces connected with the supporting structure. The pair of supporting surfaces can include a the first support surface connected with the supporting member and configured to support a display device in a viewing orientation, and a second support surface connected with the first support surface and opposing the first support surface. A supporting region between the first and second support surfaces can hold the display device in a viewing orientation.

According to certain embodiments of the present disclosure, a system for holding a display device can include a device holder configured to be connected with a video system in a seat back and configured for holding a display device in front of the video system. In some embodiments, the system can have a stowed position and a deployed position. For example, the device holder can be at least partially hidden behind the video system when the system is in a stowed position; and in the deployed position, the device holder can be positioned in front of the video system for holding the display device in view of a user.

### BRIEF DESCRIPTION OF THE DRAWINGS

Figure 1 is a perspective view of a retractable device holder mounted to a passenger seat, according to certain embodiments of the present disclosure.
Figure 2 is a side view of the retractable device holder and passenger seat shown in Figure 1.
Figure 3A is an up-angled perspective view of the retractable device holder and passenger seat of Figure 1, with the retractable device holder in a stowed position.
Figure 3B is a side perspective view of the retractable device holder and passenger seat of Figure 1, with the retractable device holder in a stowed position.
Figure 4A is an up-angled perspective view of the retractable device holder and passenger seat of Figure 1, with the retractable device holder in a deployed position.
Figure 4B is a side perspective view of the retractable device holder and passenger seat of Figure 1, with the retractable device holder in a deployed position.
Figure 5A is a side schematic view of a retractable device holder in a stowed position, according to certain embodiments of the present invention
Figure 5B is a side schematic view of the retractable device holder of Figure 5A, in an intermediate position between the stowed position and a deployed position.
Figure 5C is a side schematic view of the retractable device holder of Figures 5A-5B, in the deployed position.
Figure 6A is a side schematic view of the retractable device holder of Figures 5A-5C, configured for accommodating a small display device such as a smartphone.
Figure 6B is a side schematic view of the retractable device holder of Figure 6A, configured for accommodating a medium-sized display device such as a tablet.
Figure 6C is a side schematic view of the retractable device holder of Figure 6A, configured for accommodating a large display device such as a large tablet or flip-screen laptop.
Figure 7 is a perspective view showing a user manually expanding a deployed retractable device holder, according to certain embodiments of the present disclosure.
Figure 8 is a side schematic view of a retractable device holder having an alternative spring-sliding assembly, according to certain alternative examples, not falling within the scope of the claims.
Figure 9 is a side schematic view of a retractable device holder, such as the retractable device holder of Figure 5, connected with a tilting IFE system, according to certain embodiments of the present disclosure.
Figure 10 is a side schematic view of a retractable device holder having a dual hinge assembly, according to certain alternative embodiments of the present disclosure.
Figure 11 is a perspective view of a retractable device holder mounted to a passenger seat having a video shroud, according to certain embodiments of the present disclosure.
Figure 12 is a perspective view of the retractable device holder and passenger seat of Figure 1, showing a clearance around an audiovisual connector port in the IFE system.
Figure 13 is a perspective view of a retractable device holder mounted to a passenger seat, with a swiveling complimentary support arm, according to certain embodiments of the present disclosure.
Figure 14 is a perspective view of a retractable device holder mounted to a passenger seat, with an alternative complimentary support arm, according to certain embodiments of the present disclosure.
Figure 15 is a perspective view of a retractable device holder mounted to a support structure of an IFE system.
Figure 16A is a perspective view of an alternative embodiment of a retractable device holder mounted to an IFE system, in a stowed position, according to an illustrative example not falling within the scope of the claims.
Figure 16B is a perspective view of the retractable device holder of Figure 16A, in a deployed position holding a small display device such as a smartphone.
Figure 16C is a perspective view of the retractable device holder of Figure 16A, in a deployed position holding a medium-sized display device such as a tablet.
Figure 17A is a perspective view of another alternative embodiment of a retractable device holder mounted to an IFE system, in a stowed position, according to an illustrative example not falling within the scope of the claims.
Figure 17B is a perspective view of the retractable device holder of Figure 17A, in a deployed position holding a display device such as a tablet.
Figure 17C is a perspective view of the retractable device holder of Figure 17A, showing a complimentary surface of the IFE system.

### DETAILED DESCRIPTION

The subject matter of embodiments of the present disclosure is described here with specificity to meet statutory requirements, but this description is not necessarily intended to limit the scope of the claims. The claimed subject matter may be embodied in other ways and may be used in conjunction with other existing or future technologies. This description should not be interpreted as implying any particular order or arrangement among or between various steps or elements except when the order of individual steps or arrangement of elements is explicitly described.

The described embodiments generally provide a retractable display device holder for passenger seats and systems for holding a portable display device. While systems for retractable display devices are discussed for use with aircraft seats, they are by no means so limited. Rather, embodiments of the retractable display device holder and system may be used in any type of seat that has a surface located in front of the seat.

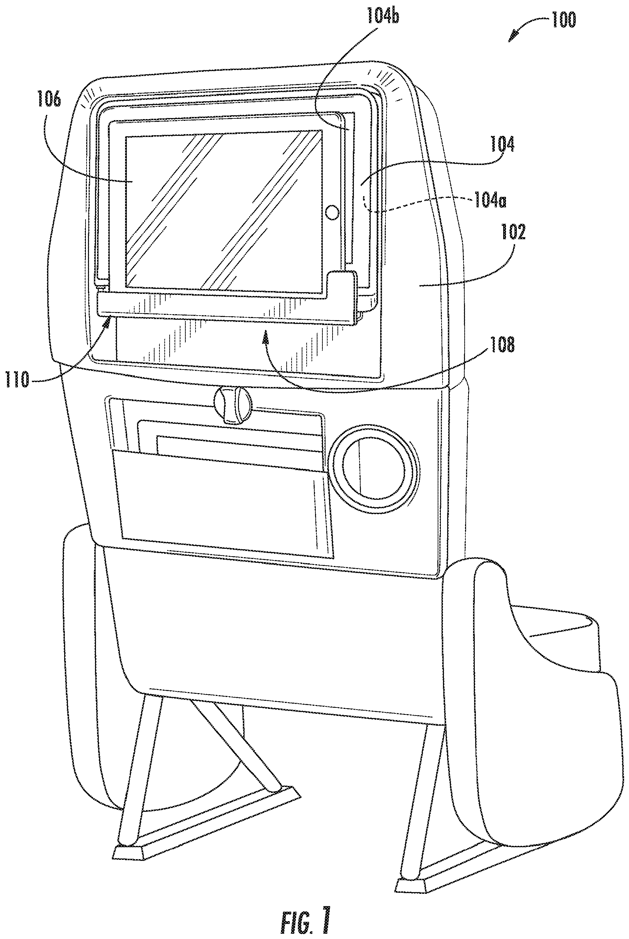

Figures 1-17 illustrate embodiments of a retractable device holder and a system for holding a display device. The retractable device holder may be connected with an IFE system, which can be a video system. In some cases, the retractable device holder may be connected with a support system or enclosure of the video display of video system. The support system may form a skeleton or base structure that supports the video display. In use, the support system may be mounted with respect to a seat back or other structure. The support system may have a pivot point along one or both edges. The video system may be mounted with respect to the support system such that it is connectible to the seat back and able to swivel about the pivot. The retractable device holder may be able to move relative to the video system. In some cases, the retractable device holder can be stowed behind the video system. In other cases, the retractable device holder can be deployed for holding the display device in front of the video system. When the video system is rotated, this may cause the retractable device holder to rotate alongwith. For example, a passenger may be able to adjust a viewing angle of their own display device in the device holder by rotating the video system.

Although embodiments herein are referred to as connectible with respect to a video system, it should be understood that embodiments of a retractable device holder may be supported by or connected with any other suitable IFE system component that presents a suitable viewing angle to a user.

Figures 1-4 illustrate a system 100 for supporting a display device 106 can include a seat 102 having a video system 104 associated there with. The video system 104 may provide a video screen 104b configured to connect with audiovisual programming provided by, for example, an airplane. The video system 104 can include a video screen 104b of an IFE system and a support structure 104a for supporting the video screen. The video screen 104b may define a front surface of the video system 104. The support structure for supporting the video screen can be rotated or inclined about a pivot in order to rotate or incline the video screen. The system 100 may support a display device 106 in use. There may be provided a stowage space 108 in the seat 102 and extending behind the video system 104. A retractable device holder 110 may be connected with the support structure 104a. In particular, the retractable device holder 110 may be connected with the support structure portion of the video system 104, and may be connected therewith behind the video system 104 within and/or above the stowage space 108. The retractable display device 110 may be stored in the stowage space 108 when not in use. In some embodiments, the retractable display device 110 can be deployed in order to accommodate the display device, e.g. a smartphone, an electronic reader, a tablet or tablet computer; or other suitable device in an orientation suitable for display to a user. For example, the display device 106 can be oriented by the display device 110 to conform to the same viewing angle as the video system 104. In some embodiments, the retractable device holder 110 can also be stowed in order to secure parts of the device holder behind the video system 104 and below the video system 104 in a configuration that minimizes protrusion of the retractable device holder 110 from the seat body 102. In some embodiments, a viewing angle can be modified by tilting the video system 104 relative to the seat 102, or the viewing angle can be modified by tiling the display device 110 relative to the video system 104, or both. The retractable display device 110 may be formed of materials including but not limited to aluminum, stainless steel, aramid fibers, polycarbonate, polypropylene, other metallic materials, composite materials, or other similar materials.

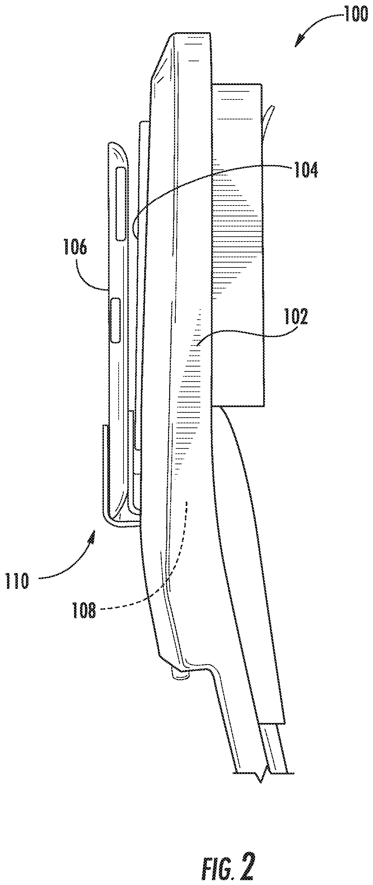

Figure 2 shows the system 100 of Figure 1 in a side view, showing the video system 104 in the seat 102, the retractable device holder 110 in a deployed configuration in front of the video system 104, and a tablet-sized display device 106 mounted in the retractable device holder 110 in front of the video system 104. The stowage space 108 may be located underneath and behind the video system 104, and may be sized such that the retractable device holder 110 can be rotated and slid upwardly in the stowage space 108 to be secured behind the video system 104.

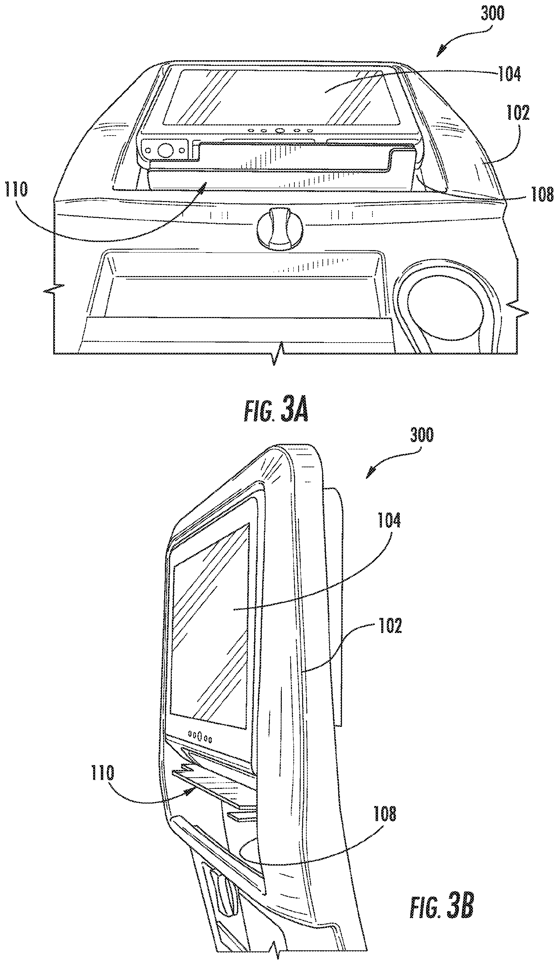

Figure 3A shows a system 300 for supporting a display device (not shown), similar to system 100 of Figure 1, from a low angle, illustrating a device holder 110 in a stowed configuration. While stowed, part of the device holder 110 may be secured behind the video system 104 in the stowage space 108, and part of the device holder 110 may be visible to a user but out of the way and below the video system 104 in the stowage space 108.

Figure 3B shows the system 300 of Figure 3A from a side perspective angle, illustrating the device holder 110 in a stowed configuration, as in Figure 3A. In this view, the device holder 110 is stowed in the stowage space 108, and does not protrude from the stowage space 108 beyond the video system 104. A portion of the device holder 110 may be visible and can be reached from outside the stowage space 108 in order to permit a user to deploy the device holder 110. While stowed, the device holder 110 may be approximately flush with the screen 104b of the video system 104. In some case the device holder may be approximately flush with a front portion of the video system, such that it does not impede passenger safety. "Approximately flush" is used to mean that the device holder 110 does not extend past the front portion of the video system 104 to an extent that would cause injury to a passerby. For example, flush may include an embodiment in which the device holder 110 lays generally against the video system 104 without creating a space therebetween. Flush may include an embodiment in which the device holder 110 does not protrude outwardly in front of the video system.

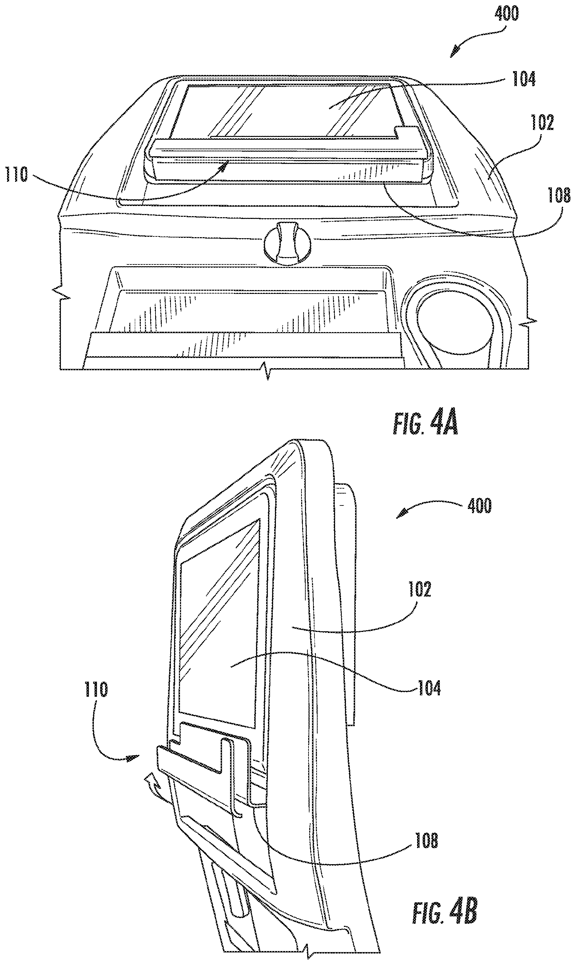

Figure 4A shows a system 400 for supporting a display device (not shown) similar to system 300 of Figures 3A-3B from a low angle, illustrating the device holder 110 in a deployed configuration. While deployed, the device holder 110 projects from the stowage space 108 in the seat 102 below the video system 104.

Figure 4B shows the system 400 of Figure 4A from a side perspective angle, illustrating the device holder 110 in a deployed configuration, as in Figure 4A. In this view, the device holder 110 does not extend beyond the video system 104 behind the seat 102. The device holder 110 extends outside the stowage space 108 and in front of the video system 104 in order to permit a user to insert a display device (not shown) in the device holder 110.

As best illustrated in Figures 3-4 above, the device holder 110 can be reconfigured between the stowed position (as in system 300 of Figures 3A-3B) and the deployed position (as in system 400 of Figures 4A-4B). In some embodiments, deploying or stowing the device holder 110 can be performed manually. For example, a user can deploy a stowed device holder 110 gripping the device holder and pulling the device down from the stowage space 108, and then rotating the device holder 110 upward. By way of further example, a user can stow a deployed device holder 110 by tilting the device holder down, and then sliding the device holder 110 up into the stowage space 108 behind the video system 104. In some alternative embodiments, the retractable device holder 110 may be stowed or deployed via an electromechanical actuator controlled by an electronic pushbutton, such that the configuration of the retractable device holder 110 can be adjusted by a passenger pressing the pushbutton. In some alternative embodiments, the retractable device holder 110 may be secured in the stowed position or secured in the deployed position by means of, for example, a mechanical catch with a release, such that actuating the release can allow the retractable device holder to move between the stowed and released positions. In some cases, an actuator may be connected with a release mechanism, such that the retractable device holder 110 may be locked in a stowed position until released by the actuator. For example, the release mechanism may be controllable by crew, so as to prevent passengers from using the retractable device holder 110 at certain times, such as when it is unsafe to do so. Various other specific mechanisms may be suitable for stowing and deploying a retractable device holder 110, as described below.

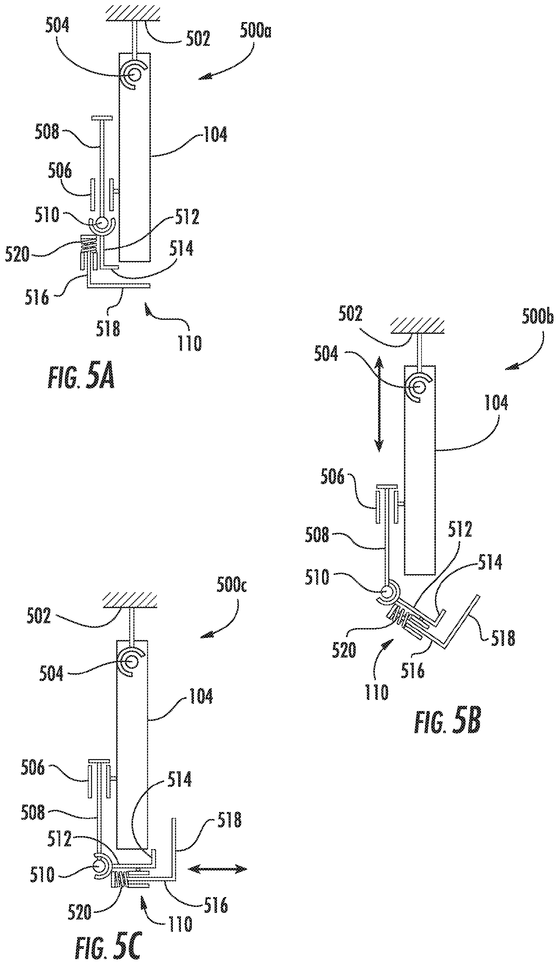

Figures 5A-5C illustrate a retractable device holder 110 in a stowed configuration 500a, partially deployed position 500b, and deployed position 500c, for supporting a display device, with specific attention to features for stowing and deploying the retractable device holder 110, in accordance with embodiments. However, it will be understood that various other features may be used to stow and deploy the retractable device holder 110 in accordance with embodiments.

Figure 5A is a side schematic view showing the device holder 110 in a stowed configuration 500a. A video system 104 can be connected with a video system support 502 in, for example, a back of a seat (not shown). In embodiments, the video system 104 can be rotatingly connected with the support. For example, the video system 104 can be connected via a video system hinge 504 with the support 502, such that the video system 104 can be tilted upward.

In one example, the device holder 110 can include a first slider support 506. As illustrated by Figure 5A, the first slider support 506 may be generally positioned rearwardly of a video system 104 or other in-flight entertainment unit or screen position on a seat back. The device holder 110 can include a rear support element 514 and a front support element 518 which can be configured to grip an object placed in-between the rear and front support elements, such as a display device. Elements of the device holder 110 make up a supporting structure for connecting the device holder 110 with the video system 104 such that the device holder 110 can be oriented in a deployed or stowed position relative to the video system 104. The device holder 110 can include a first slider support 506, which can be connected with the video system 104, and may support a first slider 508. The first slider support 506 may be any suitable structure for supporting a sliding member, such as a bracket or guide. The first slider 508 may be any suitable structure for cooperating with a sliding support in order to extend and retract, such as a rod or slide. The first slider 508 may also be connected with a hinge 510, such that the position of the hinge 510 can be varied by moving the slider 508 within the sliding support 506. In some cases, the hinge 510 can be retracted to a region behind the video system 104, or deployed to a region below the video system 104. The hinge can be connected with a second slider support 512, such that a position of the second slider support 512 can be varied by moving the first slider 508 within the sliding support 506, and can also be varied by tilting the second sliding support 512 at the hinge 510. In some cases, the second slider support 512 can also be connected with the rear support element 514. A second slider 516 can be operably coupled with the second slider support 512, such that the second slider can slide relative to the second slider support. The second slider can be connected with the front support element 518, such that the front support element 518 can slide relative to the rear support element 514.. The second slider 516 and second slider support 512 can be operably coupled with a spring assembly 520 which can cause the front support element 518 and rear support element 514 to be elastically coupled. The front support element 518, when pulled away from the rear support element 514, may tend to exert a force pulling the front support element 518 back toward the rear support element 514, so as to grip an object placed in-between the rear and front support elements 514, 518.

In accordance with embodiments, most of the components of the device holder 110 in the stowed configuration 500a are hidden from view of a user by the video system 104. For example, as shown in Figure 5A, the first slider 508 may be fully retracted in the first slider support 506, and the second slider support 512 may be tilted down at the hinge 510 in a fully stowed position, such that the rear support element 514 and front support element 518 are each tucked below the video system 104.

Figure 5B is a side view schematic showing the device holder 110 in a partially deployed configuration 500b. In the partially deployed configuration 500b, the first slider 508 may extend downward in the first slider support 506, lowering the hinge 510 below the video system 104. The second slider support 512 may be tilted up at the hinge 510 in order to bring the rear support element 514 and front support element 518 toward a user.

Figure 5C is a side view schematic showing the device holder 110 in a deployed configuration 500c. In the deployed configuration 500c, the first slider 508 may be fully extended downward in the first slider support 506, so that the hinge 510 may be below the video system 104, or sufficiently low so as not to be obstructed by the video system 104.

The second slider support 512 may be tilted up at the hinge 510 so that the rear support element 514 and front support element 518 are oriented toward a user. The hinge 510 may support a weight of a display device when the device holder 110 is deployed. To that end, the hinge 510 can include one or more stops, a catch, a ratcheting mechanism, a friction bearing, or any suitable mechanism for providing that the hinge 510 can resist rotation when a downward force exerted on the front and rear support elements 518, 514 by, for example, a display device when a display device is placed between the front and rear support elements.

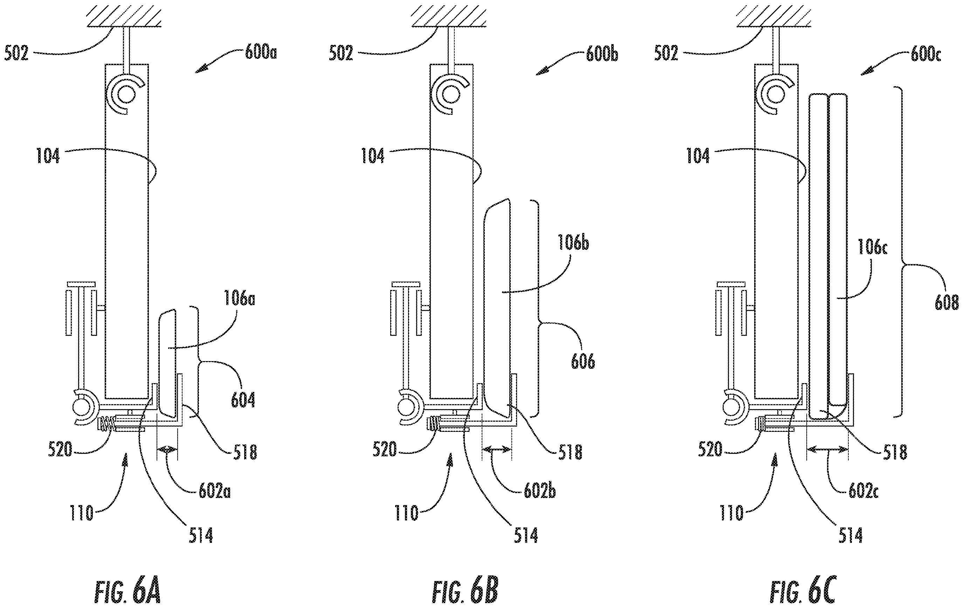

Figures 6A-6C illustrate a retractable device holder 110 in a deployed configuration. Figure 6A shows the retractable device holder 110 supporting a small device 600a. Figure 6B shows the retractable device holder 110 supporting a mid-sized device 600b. Figure 6C shows the retractable device holder 110 supporting a large device 600c. However, it will be understood that various other features may be used in conjunction with the retractable device holder 110 in accordance with embodiments.

Figure 6A shows a side view schematic of the device holder 110 in a deployed configuration with a first display device 600a, such as a smartphone, in accordance with embodiments. A video system 104 may be connected with a video system support 502, and the device holder 110 may be connected with respect to the video system 104 as shown above with respect to Figures 5A-5C. The device holder 110 includes a front support element 518 which may partially wrap around a bottom of the first display device 106a, and a rear support 514 which may further support the first display device 106a. When a first display device 106a is inserted in the device holder 110, the front support element 518 can be pulled away from the rear support element 514, which can compress the spring 520 until a first clearance distance 620a is available for accommodating the first display device 106a. The first display device can have a height 604 which extends above the front and rear support elements 518, 514.

Figure 6B shows a side view schematic of the device holder 110 in a deployed configuration, supporting a second display device 106b, such as a tablet, in accordance with embodiments. This device holder 110 is similar to that described above except that a second clearance distance 620b may be wider than the first clearance distance 620a. In some cases, the second height 606 may be significantly taller than the first or second support elements 518, 514. In some cases, a portion of one or both of the first and second support elements 518, 514 may extend up along a side of the second display device 106b (not shown).

Figure 6C shows a side view schematic of the device holder 110 in a deployed configuration with a third display device 106c, such as a large tablet device or a flip-screen laptop computer, in accordance with embodiments. This device holder 110 is similar to that described above except that a third clearance distance 620c may be wider than the first or second clearance distances 620a-b. The third height 606 may be significantly taller than the first or second support elements 518, 514. A portion of one or both of the first and second support elements 518, 514 may extend up along a side of the third display device 106c (not shown) to lend additional support to the third display device 106c. In some cases, the third display device 106c may be allowed to lean, e.g. against the video system 104, so as to provide additional vertical stability to the third display device 106c.

In some alternative embodiments, the first and second support elements 518, 514 can exert sufficient gripping force to secure a display device, such as a smartphone or tablet. In some cases, a display device can be supported from a side or top of the display device. For example, in an alternative embodiment, a device holder may be configured to extend from around a side or the top of the video system 104 and grip the display device from a top or side of the display device.

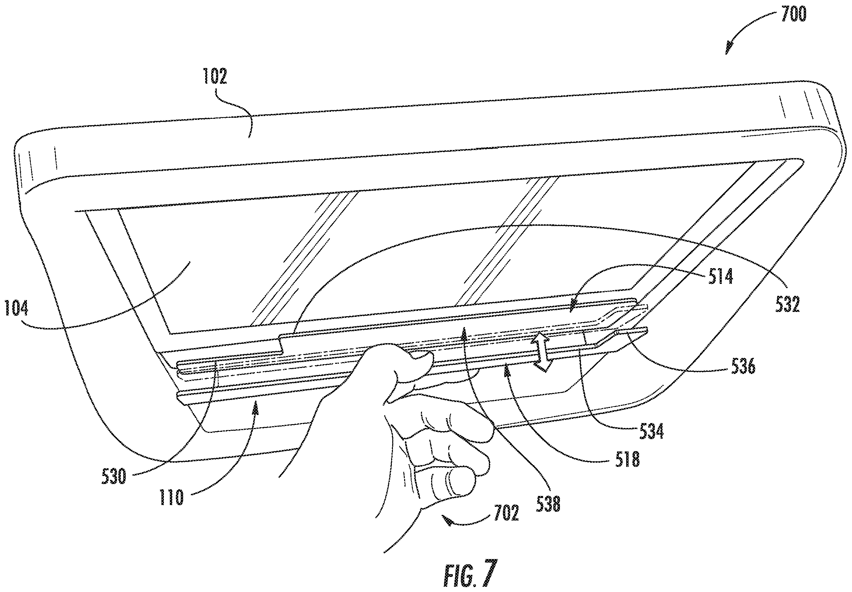

Figure 7 illustrates a top perspective view of a system 700 similar to the system 100 shown in Figure 1, showing additional retention features of the device holder 110. The system 700 includes a seat 102, a video system 104, and the device holder 110 which may be connected with the video system (connection not shown) as described above with reference to Figures 5A-5C and 6A-6C. In some embodiments, the device holder 110 can include a front support element 518 and a rear support element 514. The rear support element 514 can include a low portion 530 and a high portion 532. In some embodiments, the low portion 530 of the rear support element 514 can be sized to permit access to the video system 104, such as access to controls of the video system and/or access to an audiovisual port. The high portion 532 can be any suitable height for supporting the back of a display device (not shown) when a display device is inserted into the device holder 110, but is preferably low enough that the device holder 110 can be folded into a stowed position (as describe above with respect to Figure 5A) without the rear support element 514 protruding past a face of the video system 104. In some embodiments, the front support element 518 can also include a low portion 534 and a high portion 536, with the high portion 536 arranged at a side of the device holder 110 so that, when a display device (not shown) is positioned in the device holder 110, the high portion 536 can support an edge of the display device without obstructing the screen. In some cases, the low portion 534 of the front support element 518 may be sufficiently low to avoid obstructing the screen and/or buttons of a display device, or may be sized to permit viewing of the screen of a display device when the a display device is placed in the device holder 110. Contact surfaces 538 of the rear and front support elements 514, 518 can include any or all surfaces configured to contact a display device, and can be formed of or with a material coating for gripping and/or protecting a display device. In some embodiments, contact surfaces 538 can include smooth materials for preventing scratching, such as a rubber or soft plastic surface. Contact surfaces 538 may include a cushioning layer, such as a soft rubber, gel, and/or a fabric layer. In some cases, contact surfaces 538 may include gripping features, such as one or more soft rubber protrusions, and/or any suitable positive material features for stopping a display device from being slid laterally out of the device holder 110. The front support element 518 may be pulled back a clearance region 704 from the rear support element 514, e.g. by a user 702, such that a display device can be placed within the clearance 704.

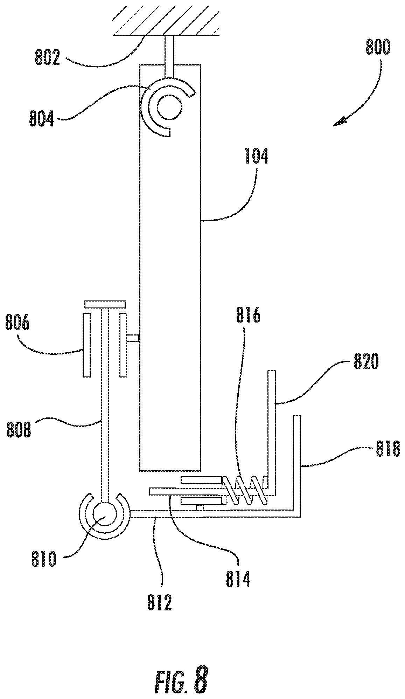

Figure 8 is a side-schematic view showing a system 800 for holding a display device, in accordance with an example not falling within the scope of the claims. . Similar to systems 500a-500c described above in Figures 5A-5C with respect to the device holder 110, the system 800 can include a video system 104 connected with a video system support 802 via a hinged connection 804. The system 800 can include a rear support element 820, and a front support element 818 configured for supporting a display device. Elements connecting the rear support element 820 and front support element 818 can include a first slider support 806 with a first slider 808 movably engaged therein, a hinge 810, a second sliding support 812, and a second slider 814 movably engaged with the second slider support 812 in conjunction with a spring assembly 816. The system 800 differs from systems employing the device holder 110 in that the front support element 818 can be static with respect to the second slider support 812, and the rear support element 814 can be configured to move backwards and compress the spring assembly 816. Thus, a display device may be inserted into the system 800 by pressing back on the rear support element 814, e.g. with the display device, and sliding the display device into place between the rear and front support elements 814, 818. In some cases, the system 800 may enable a user to insert a display device with one hand, i.e. without first expanding the front and rear support elements 818, 814.

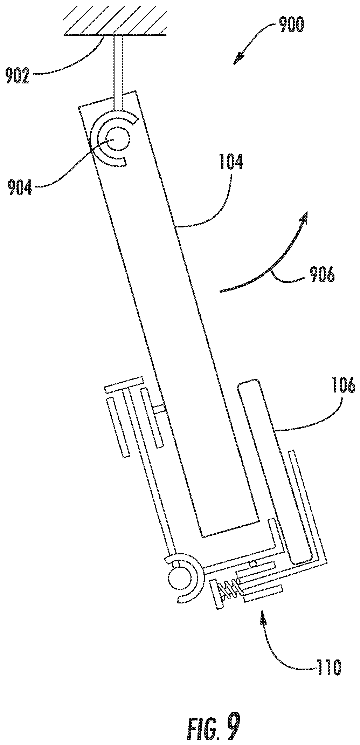

Figure 9 is a side-schematic view showing a system 900 for holding a display device and tilting the display device for viewing, not falling within the scope of the claims. . The system 900 can include a video system 104 connected with a video system support 902 via a hinged connection 904, and a display device holder 110 connected with the video system 104. The display device holder 110 is shown holding a display device 106. In order to adjust an angle of viewing, the video system 104 can be tilted upward 906, which may cause the attached device holder 110 to tilt along with the video system 104, in order to adjust the position of the display device 106.

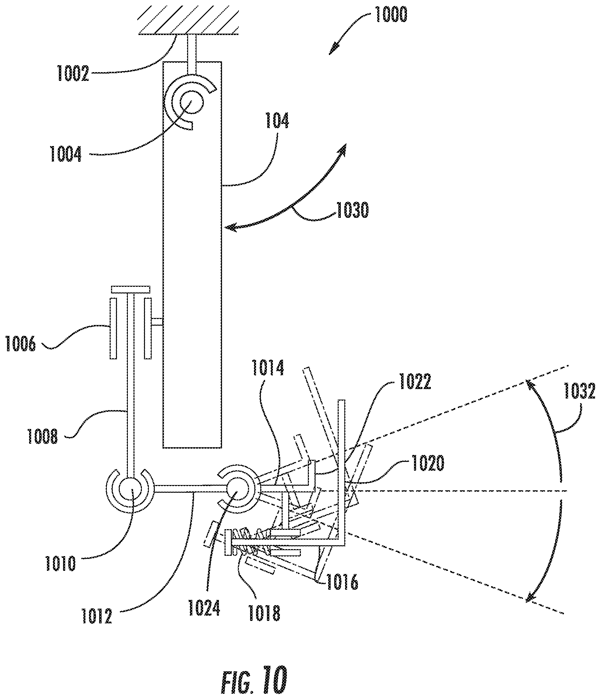

Figure 10 is a side-schematic view showing an alternative example of a system 1000 for holding a display device, not falling within the claimed scope. . The system 1000 can include a video system 104 connected with a video system support 1002 via a hinged connection 1004. Aspects of the system 1000 may function similarly to the device holder 110 described above in Figures 5A-5C, but may differ in particular by providing that the video system 104 may tilt 1030 relative to the video system support 1002 via the hinged connection 1004. The system 1000 may further or alternatively provide that the front and rear support elements 1020, 1022 can tilt together 1032 relative to video system 104, e.g. via the second hinge 1024 (as shown), and/or via the first hinge 1010, such that a variety of viewing positions of a display device can be achieved. The system 1000 can include a first slider support 1006 with a first slider 1008 movably engaged to the first slider support 1006, a first hinge 1010, and an intermediate member 1012. The position of the first hinge 1010 can be varied by extending or retracting the first slider 1008 relative to the first slider support 1006. The intermediate member 1012 can thus tilt at the first hinge 1010. The intermediate member 1012 can connect with a second hinge 1024, so that a position of the second hinge 1024 can be varied via the intermediate member 1012. A second sliding support 1014 can be connected with the second hinge 1024 and operable connected with a second slider 1016, which may be movably engaged to the second sliding support 1014 in conjunction with a spring assembly 1018. The rear support element 1022 can be connected with the second sliding support 1014, and the front support element 1024 can be connected with the second slider, such that the rear and front support elements 1022, 1024 may be elastically connected with each other. For example, the front support element 1020 may be pulled away from the rear support element 1022 in order to compress the spring assembly 1018, so that the front and rear support elements 1020, 1022 tend to produce a gripping force on an object disposed between them.

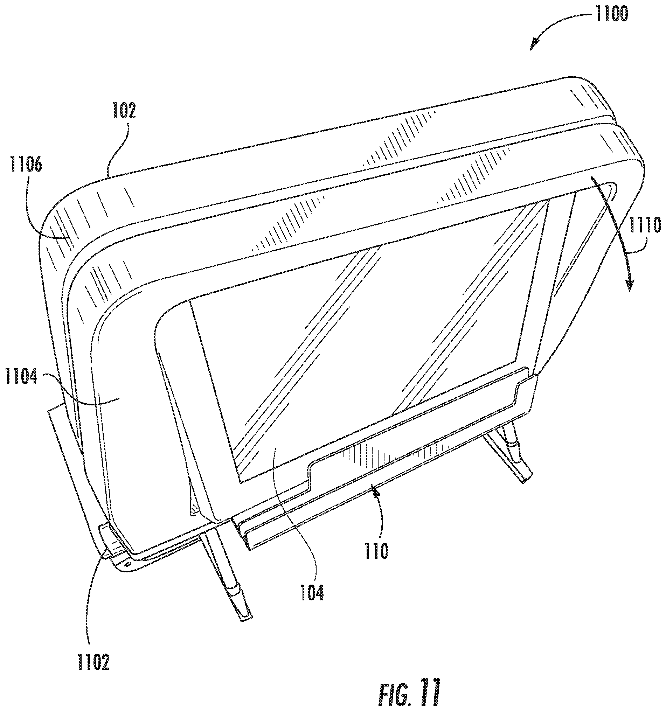

Figure 11 is a perspective view of a system 1100 for holding a display device with a video shroud, in accordance with embodiments. The system 1100 can include a seat 102, a video system 104, and a display device holder 110, similar to the display device holder 110 shown above in, for example, Figure 1. In accordance with embodiments, a video shroud 1104 can be connected with the seat 102 and configured to extend around the video display 104 and above the device holder 110. In some embodiments, the shroud 1104 may be configured to block incident light above the device holder 110, such that glare on any device placed in the device holder 110 can be reduced. In some embodiments, the shroud 1104 may be static with respect to the seat 102. In some alternative embodiments, the shroud 1104 can be configured to extend from the seat 102, e.g. from a pocket inside a main portion 1106 of the seat, by rotating about a hinge 1102 or other suitable connector.

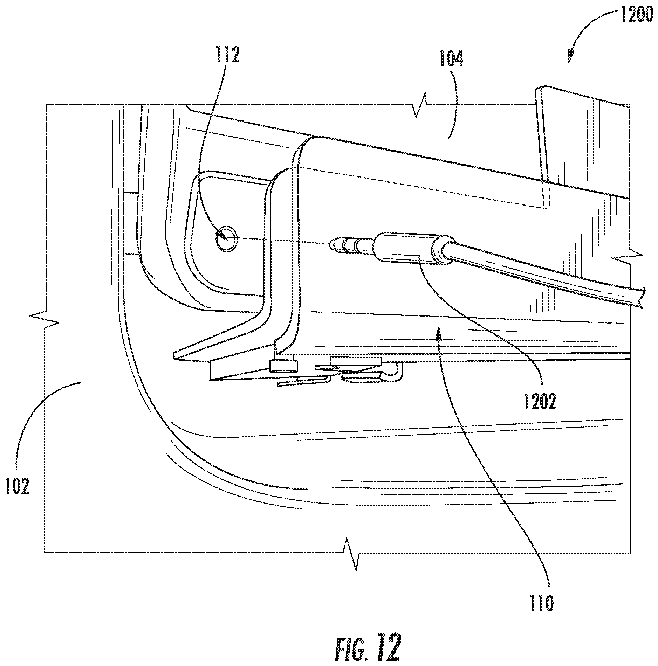

Figure 12 is a perspective view of a system 1200 for holding a display device without impinging on an audiovisual port, such as a headphone jack, in accordance with embodiments. The system 1200 can include a seat 102, a video system 104 with an audiovisual port 112, and a device holder 110. The device holder 110 may be sized to enable access to the video system 104, for example by not extending an entire width of the video system 104. Thus, portions of the video system 104, for example one or more controls, audiovisual ports, or other aspects of the video system 104, may be unobstructed by the device holder 110.

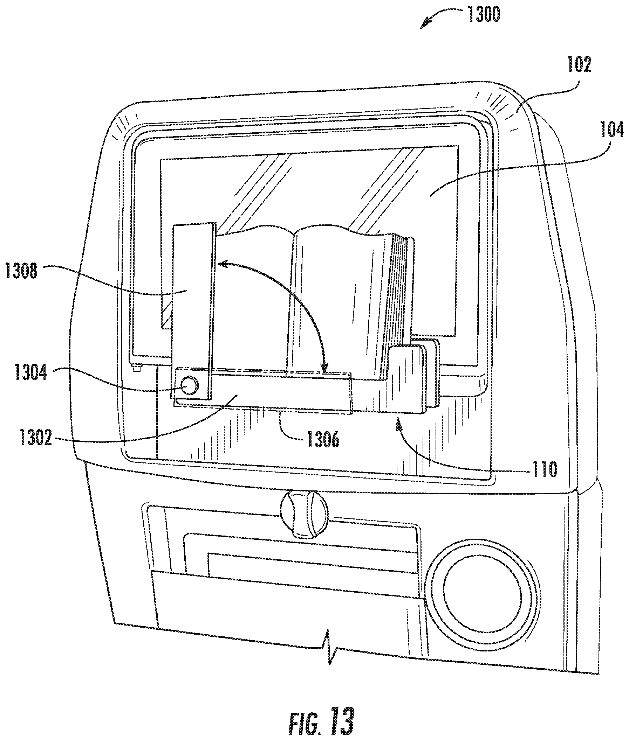

Figure 13 is a perspective view of a system 1300 for holding a display device in conjunction with a complimentary retention feature, for example a support arm 1302, in accordance with embodiments. The system 1300 can include a seat 102, a video system 104, and a device holder 110. In some embodiments, the device holder 110 can include a support arm 1302 which may be movably connected with the device holder 110. The support arm 1302 so may be moved to retain a display device. For example, in some embodiments, the support arm 1302 can be rotatably connected with the device holder 110 with a stowed position 1306, in which the support arm does not obstruct access to the device holder 110, and with a deployed position 1308, in which the support arm further supports a display device placed in the device holder 110.

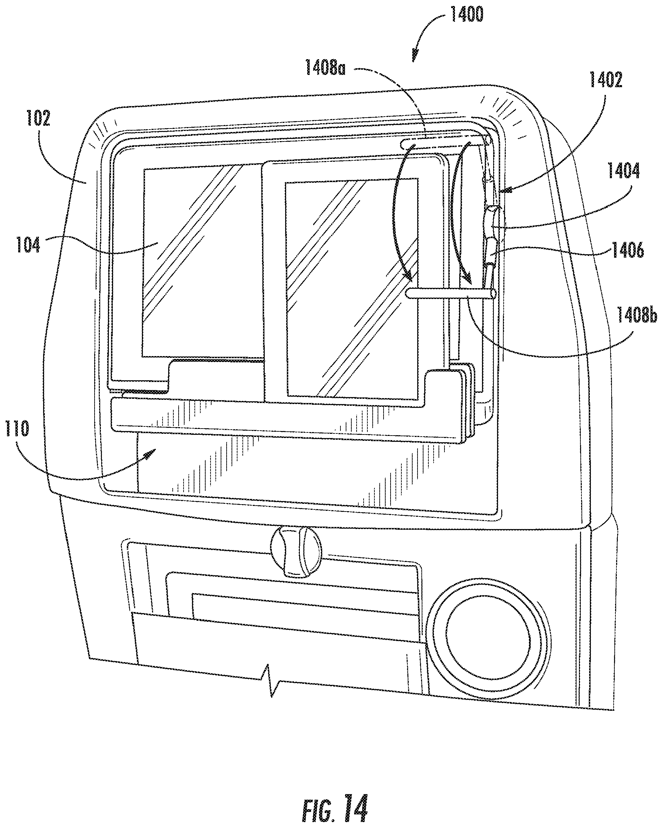

Figure 14 is a perspective view of a system 1400 for holding a display device in conjunction with an alternative embodiment of a complimentary retention feature, for example a complimentary support arm 1402.. The system 1400 can include a seat 102, a video system 104, and a device holder 110. The support arm 1402 can be movably connected with one of the seat 102, the video system 104, or the device holder 110 so as to enable the support arm 1402 to move to retain a display device. In some cases, the support arm 1402 may be connected with the seat 102 or with the video system 104 independently of the device holder 110. For example, in some embodiments, the support arm 1402 can be rotatably connected with the video system 104 via a hinged connection 1404 with a stowed position 1408a and a deployed position 1408b. In some embodiments, the support arm 1402 can be configured to extend or retract, e.g. via a telescoping or sliding connection 1406, so as to accommodate display devices of varying sizes. In some embodiments, the support arm 1402 may be slidingly connected with the video system 104, such that a vertical position of the support arm 1402 can be adjusted by a user.

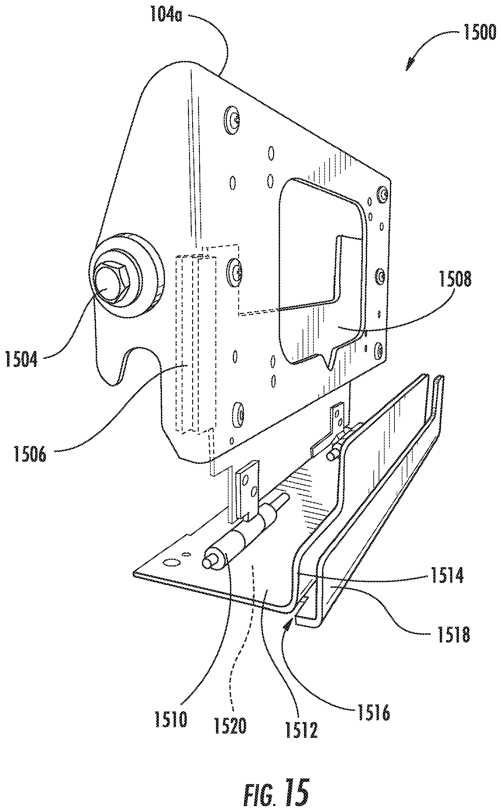

Figure 15 is a perspective view of a system 1500 for holding a display device in conjunction with a support structure 104a of an IFE system, such as a support structure of a video display part of the IFE system. The system 1500 may be similar in structure and function to the system 100 shown in Figures 1-4, and is shown oriented in a deployed position, similar to the deployed position 500c of the device holder 110 as shown in Figure 5C. The system 1500 includes a video system support structure 104a. The video system support structure 104a may be a component of a video system or an IFE system, such as the video system 104 referred to in Figures 1-14. The video system support structure 104a may be configured to support a video display of an IFE system or video system. Slider support brackets 1504 can be connected with the video support structure 104a for interacting with a sliding part 1508, which is similar to the slider 508 described above in reference to Figures 5A-5C. The sliding part 1508 can be connected with a hinge assembly 1510, which can further connect with a rear support part 1512. The rear support part 1512 may function similarly to the second slider support 512 described above in reference to figures 5A-5C. The rear support part 1512 may extend on either side of the hinge assembly 1510, such that a portion of the rear support part 1512 may act as a stop against rotation about the hinge assembly 1510. A rear support element 1514 may be connected with, or may be formed of the same part with, the rear support part 1512, and may be arranged to support a back of a display device (e.g. may be substantially vertical). A second sliding part 1516 can be slidingly connected with the rear support part 1512. In particular, the second sliding part 1516 may be further connected with the rear support part 1512 via a spring-sliding connection 1520. The second sliding part 1516 may be further connected with a front support element 1518, which may be oriented parallel to the rear support element 1514. The front and rear support elements 1518, 1514 may be slidable away from each other, similar to the front and rear support elements 518, 514 described in Figures 5A-5C, such that the front and rear support elements 1518, 1514 can accommodate a display device, such as a tablet, therebetween. The front and rear support elements 1518, 1514 can be elastically coupled via the spring-sliding connection 1520, such that they can exert a gripping force between them to grip a display device.

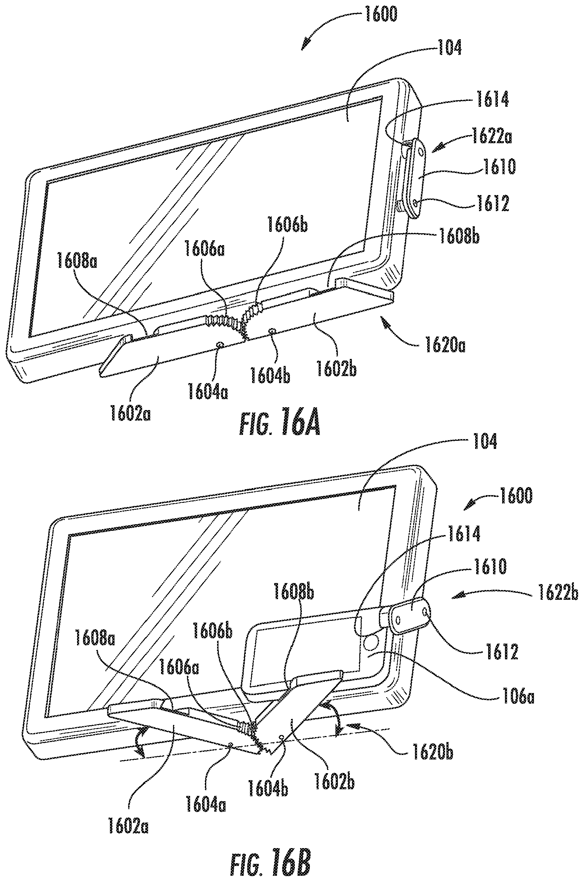

Figure 16A is a perspective view of a system 1600 for holding a display device in conjunction with a video system 104, in accordance with an alternate example not falling within the scope of the claims, showing the system 1600 in a stowed position 1620a. The system 1600 can include first and second support members 1602a, 1602b, which can be connected with the video system 104 via first and second pivots 1604a, 1604b. In some cases, the video system 104 may refer to a support structure of an IFE system, or a support structure for a video screen of an IFE system. The first and second support members 1602a, 1602b may be arranged, in the closed position 1620a, extending away from one another along an edge of and/or underneath the video system 104. The first and second support members 1602a, 1602b can further include one or more grooves 1608a, 1608b, which may be arranged at an angle in or on the support members 1602a, 1602b. The first and second support members 1602a, 1602b can further include coordinating features 1606a, 1606b, which coordinate the motion of the support members 1602a, 1602b, relative to each other. In some cases, as shown, the coordinating features 1606a, 1606b may be interlocking teeth on mating surfaces. However, various other forms of coordinating features are possible, such as abutting surfaces, abutting friction surfaces (e.g. rubber), externally connected gears, or other suitable coordinating features. A complimentary support 1610 may be provided. The complimentary support 1610 may be connected with a different part of the video system 104 than the first and second support members 1602a, 1602b. The complimentary support 1610 can include a pivot 1612 connecting the complimentary support 1610 with the video system 104. The complimentary support 1610 can further include a grooved part 1614 in an end opposite the pivot 1612 configured to accept a display device. The grooved part 1614 can include a single groove in a rotating part that rotates relative to the complimentary support 1610, or it can include two grooves passing through each other or near each other at different angles. In some cases, the grooved part 1614 can include a single groove shaped to fit a display device at one angle or at multiple angles. The complimentary support 1610 is shown in a stowed position 1622, which may be parallel to the video system 104.

Figure 16B is a perspective view of the system 1600 shown in Figure 16A, in a deployed position 1620b holding a small display device 106a. In the deployed position 1620b, the first and second support members 1602a, 1602b may be oriented at an angle to the video system 104, such that the grooves 1608a, 1608b are aligned with each other and with the small display device 106a. The grooves 1608a, 1608b may be kept in alignment by way of, for example, the coordinating features 1606a, 1606b. The complimentary support 1610 may be oriented in a first deployed position 1622b, which may be a low deployed position, such that the complimentary support 1610 is rotated out and down from the pivot 1612, and such that the grooved part 1614 can interact with the small display device 106a to further restrain the small display device 106a. The small display device 106a may rest entirely on one of the first and second support members 1602a, 1602b, for example the second support member 1602b. In some cases, the complimentary support 1610 may be provided on one side or on the other side of the video system 104. In some cases, an additional complimentary support 1610 may be provided, such that a display device may be accommodated at either side of the video system 104.

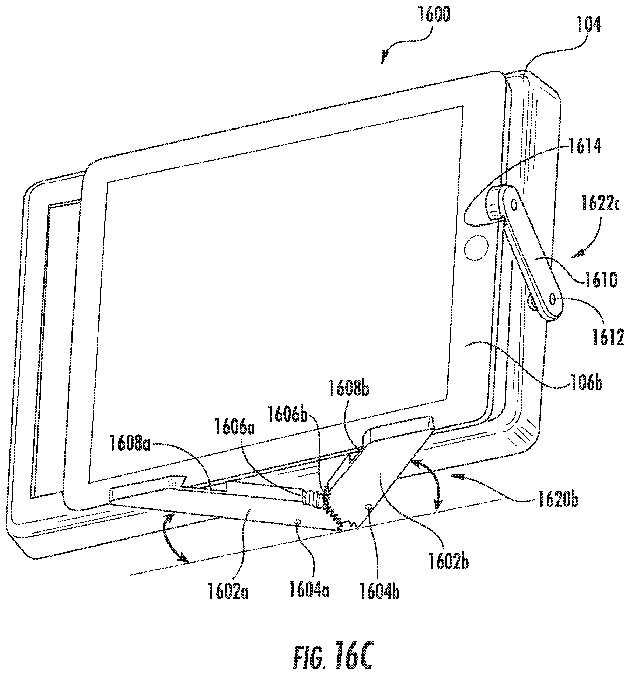

Figure 16C is a perspective view of the system 1600 shown in Figure 16A, in a deployed position 1620b supporting a mid-sized display device 106b. In the deployed position 1620b, the first and second support members 1602a, 1602b may both support the mid-sized display device. The complimentary support 1610 may be oriented in a second deployed position 1622b, which may be a high deployed position, such that the complimentary support 1610 is rotated out and up from the pivot 1612, and such that the grooved part 1614 can interact with the mid-sized display device 106a to further restrain the mid-sized display device 106a.

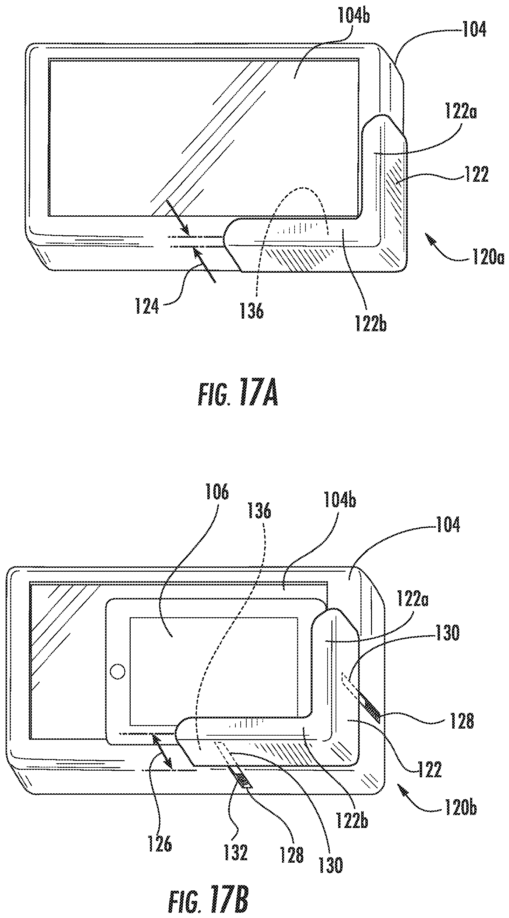

Figure 17A is a perspective view showing an alternative example, not falling within the scope of the claims, of a device holder 122 for holding a display device in conjunction with a video system 104, in a stowed position 120a. The device holder 122 can be slidingly connected with the video system 104 such that the device holder is approximately flush with the video system 104, e.g. with the video screen 104b when in the stowed position. The device holder 122 may be provided as having an upper arm 122a and a lower arm 122b, with an L-shape or angle formed between the arms. The arms may form an interior cavity 136 that can be positioned around the sides of the video system 104. The interior cavity 136 can receive the video system 104. A clearance distance 124 of the device holder 122 in front of the video screen 104b may be small, for example, on an order of approximately 1-5mm. In some cases, a gap may be provided between the video system 104 and the device holder 122 in order to allow a user to grip the device holder 122.

Figure 17B is a perspective viewing showing the device holder 122 of Figure 17A in a deployed position 120b, holding a display device 106. The device holder 122 can be slidingly connected with the video system 104. For example, the device holder 122 can operate via tracks 128 in the device holder that interact with corresponding features 130 of the device holder 122. Corresponding features 130 may be, for example, protrusions of the interior cavity 136. However, various forms of sliding connection are possible. For example, positive features may instead be provided on the video system 104 for interacting with tracks in the device holder 122. In some cases, a different form of connection than a sliding connection may be provided. For example, the device holder 122 may swivel forward from the stowed position 120a to the deployed position 120b on one or more hinged connectors (not shown). Additionally or alternatively, a spring assembly 132 may be provided to elastically couple the device holder 122 with the video system 104. For example, a spring may be provided in a track 128 of the sliding connection. The spring assembly 132 may cause the device holder 122 to resist being pulled out from the stowed position 120a to the deployed position 120b. In some cases, the device holder 122 may exert a gripping force against the display device 106 when the display device is inserted in the device holder. The device holder 122 may hold the display device 106 against the video system 104, for example, abutting the video screen 104b, or another suitable portion of the video system 104.

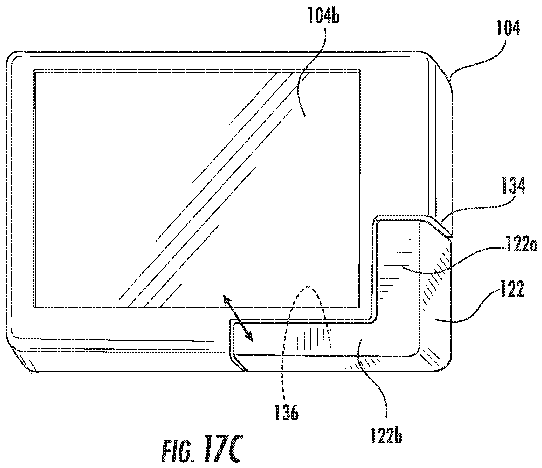

Figure 17C illustrates an alternate example not falling withing the scope of the claims, in which the shroud of the video system 104 has a depression 134 sized and shaped to correspond to contours of the device holder 122. To stow, the entirety of the device holder 122 slides into the depression for storing. For use, the device holder 122 slides out of the depression. The device holder 122 may be structurally similar to other embodiments described, such that an interior cavity 136 can receive a display tablet or device in use. The video screen 104b may support a rear surface of the display tablet or device to be viewed.

Different arrangements of the components depicted in the drawings or described above, as well as components and steps not shown or described are possible. Accordingly, the present invention is not limited to the embodiments described above or depicted in the drawings, and various embodiments and modifications may be made without departing from the scope of the claims below.

## Claims

1. A system (100) for holding a display device (106), the system (100) comprising:
a video system (104) of a seat back including a video screen (104b),
a support structure (104a) configured to cooperate with the video system (104); and
a retractable device holder (110) connected with the support structure (104a) and configured for holding the display device (106) in front of the video system (104), wherein the device holder (110) comprises a stowed position and a deployed position,
the device holder (110) being approximately flush with the video system (104) when the device holder (110) is in a stowed position, and
the device holder (110) being arranged for holding the display device (106) in front of the video system (104) when the device holder (110) is in the deployed position, the device holder (110) including a rear support element (514) and a front support element (518) which can be configured to grip an object placed in-between the rear support element (514) and front support element (518),
- **characterized in that** the device holder (110) includes a first slider support (506) connected with the video system (104) and supporting a first slider (508),
- the first slider (508) being connected with a hinge (510) such that the position of the hinge (510) can be varied by moving the first slider (508) within the first slider support (506),
- the hinge (510) being connected to a second slider support (512) such that a position of the second slider support (512) can be varied by moving the first slider (508) within the first slider support (506) and can also be varied by tilting the second slider support (512) at the hinge (510),
- the second slider support (512) being connected with the rear support element (514),
- a second slider (516) being operably coupled with the second slider support (512), such that the second slider (516) can slide relative to the second slider support (512),
- the second slider (516) being connected with the front support element (518), such that the front support element (518) can slide relative to the rear support element (514).

2. The system of claim 1, **characterized in that** the video system (104) is adjustable in inclination and wherein the support structure (104a) is connected with the video system (104) and movable with the video system (104), such that a viewing angle of the display device (106) can be adjusted by adjusting the video system (104).

3. The system of claim 1, **characterized in that** it further comprises a complimentary retention feature, the complimentary retention feature being connected with one of the device holder (110) and the video system (104) separately from the device holder (110), and being configured to retain the display device (106) in conjunction with the device holder (110) when the display device (106) is positioned in the device holder (110).

4. The system of claim 1, **characterized in that** it further comprises an aircraft seat (102), wherein the video system (104) is connected with a back of the aircraft seat (102).

5. The system of claim 1, **characterized in that**:
the front support element (518) further comprises a low portion (534) and a high portion (536), the low portion (534) being sized to permit viewing of a screen of the display device (106), and the high portion (536) being arranged to support an edge of the display device (106).

6. The system of claim 1, **characterized in that** the device holder (110) is configured for holding one of a smartphone and a tablet computing device.

7. The system of claim 1, **characterized in that** the front support element (518) is slidingly configured with respect to the rear support element (514) in a spring-loaded configuration, such that the front and rear support elements (514, 518) tend to generate a gripping force between the front and rear support elements (514, 518) when the front and rear support elements (514, 518) are separated from each other.

## Patentansprüche

1. System (100) zum Halten einer Anzeigevorrichtung (106), wobei das System (100) umfasst:
ein Rückenlehnen-Videosystem (104), das einen Videobildschirm (104b) umfasst,
eine Stützstruktur (104a), die zum Zusammenwirken mit dem Videosystem (104) ausgelegt ist, und
einen einziehbaren Vorrichtungshalter (110), der mit der Stützstruktur (104a) verbunden ist und zum Halten der Anzeigevorrichtung (106) vor dem Videosystem (104) ausgelegt ist, wobei der Vorrichtungshalter (110) eine verstaute Position und eine ausgefahrene Position aufweist,
wobei der Vorrichtungshalter (110) ungefähr bündig mit dem Videosystem (104) ist, wenn sich der Vorrichtungshalter (110) in einer verstauten Position befindet, und
wobei der Vorrichtungshalter (110) so angeordnet ist, dass er die Anzeigevorrichtung (106) vor dem Videosystem (104) haltet, wenn sich der Vorrichtungshalter (110) in der ausgefahrenen Position befindet, wobei der Vorrichtungshalter (110) ein hinteres Stützelement (514) und ein vorderes Stützelement (518), welche zum Greifen eines zwischen dem hinteren Stützelement (514) und dem vorderen Stützelement (518) angeordneten Gegenstandes ausgelegt sein können,
- **dadurch gekennzeichnet, dass** der Vorrichtungshalter (110) eine erste Schieberstütze (506) umfasst, der mit dem Videosystem (104) verbunden ist und einen ersten Schieber (508) stützt,
- wobei der erste Schieber (508) mit einem Scharnier (510) verbunden ist, so dass die Position des Scharniers (510) durch Bewegen des ersten Schiebers (508) innerhalb der ersten Schieberstütze modifiziert werden kann,
- wobei das Scharnier (510) mit einer zweiten Schieberstütze (512) verbunden ist, so dass eine Position der zweiten Schieberstütze (512) durch Bewegen des ersten Schiebers (508) innerhalb der ersten Schieberstütze (506) und auch durch Kippen der zweiten Schieberstütze (512) am Scharnier (510) modifiziert werden kann,
- wobei die zweite Schieberstütze (512) mit dem hinteren Stützelement (514) verbunden ist,
- wobei ein zweiter Schieber (516) mit der zweiten Schieberstütze (512) wirkverbunden ist, so dass der zweite Schieber (516) relativ zu der zweiten Schieberstütze (512) schieben kann,
- wobei der zweite Schieber (516) mit dem vorderen Stützelement (518) verbunden ist, so dass das vordere Stützelement (518) relativ zum hinteren Stützelement (514) schieben kann.

2. System nach Anspruch 1, **dadurch gekennzeichnet, dass** das Videosystem (104) neigungsverstellbar ist und die Stützstruktur (104a) mit dem Videosystem (104) verbunden und damit mit dem Videosystem (104) bewegbar ist, so dass ein Betrachtungswinkel der Anzeigevorrichtung (106) durch Einstellen des Videosystems (104) einstellbar ist.

3. System nach Anspruch 1, **dadurch gekennzeichnet, dass** es ferner ein komplementäres Rückhalteelement umfasst, wobei das komplementäre Rückhalteelement getrennt vom Vorrichtungshalter (110) mit dem Vorrichtungshalter (110) oder dem Videosystem (104) verbunden ist und zum Halten der Anzeigevorrichtung (106) zusammen mit dem Vorrichtungshalter (110) ausgelegt ist, wenn die Anzeigevorrichtung (106) im Vorrichtungshalter (110) positioniert ist.

4. System nach Anspruch 1, **dadurch gekennzeichnet, dass** es ferner einen Flugzeugsitz (102) umfasst, wobei das Videosystem (104) mit einer Rückenlehne des Flugzeugsitzes (102) verbunden ist.

5. System nach Anspruch 1, **dadurch gekennzeichnet, dass**:
das vordere Stützelement (518) ferner einen unteren Abschnitt (534) und einen oberen Abschnitt (536) umfasst, wobei der untere Abschnitt (534) so bemessen ist, dass er das Betrachten eines Bildschirms der Anzeigevorrichtung (106) ermöglicht, und der obere Abschnitt (536) angeordnet ist, um eine Kante der Anzeigevorrichtung (106) zu stützen.

6. System nach Anspruch 1, **dadurch gekennzeichnet, dass** der Vorrichtungshalter (110) zum Stützen entweder ein Smartphone oder einen Tablet-Computer ausgelegt ist.

7. System nach Anspruch 1, **dadurch gekennzeichnet, dass** das vordere Stützelement (518) relativ zum hinteren Stützelement (514) in einer Federkonfiguration verschiebbar ausgelegt ist, so dass die vorderen und hinteren Stützelemente (514, 518) dazu neigen, eine Klemmkraft zwischen den vorderen und hinteren Stützelementen (514, 518) zu erzeugen, wenn die vorderen und hinteren Stützelemente (514, 518) voneinander getrennt sind.

## Revendications

1. Système (100) destiné à supporter un dispositif d'affichage (106), le système (100) comprenant :
un système vidéo (104) d'un dossier de siège comprenant un écran vidéo (104b),
une structure de support (104a) conçue pour coopérer avec le système vidéo (104) et
un support de dispositif rétractable (110) relié à la structure de support (104a) et conçu pour supporter le dispositif d'affichage (106) devant le système vidéo (104), le support de dispositif (110) comprenant une position rangée et une position déployée,
le support de dispositif (110) étant approximativement à fleur du système vidéo (104) lorsque le support de dispositif (110) est dans une position rangée, et
le support de dispositif (110) étant disposé de manière à supporter le dispositif d'affichage (106) devant le système vidéo (104) lorsque le support de dispositif (110) est dans la position déployée, le support de dispositif (110) comprenant un élément de support arrière (514) et un élément de support avant (518) qui peuvent être configurés pour maintenir un objet placé entre l'élément de support arrière (514) et l'élément de support avant (518),
- **caractérisé en ce que** le support de dispositif (110) comprend un premier support de coulisseau (506) relié au système vidéo (104) et supportant un premier coulisseau (508),
- le premier coulisseau (508) étant relié à une charnière (510) de sorte que la position de la charnière (510) puisse être modifiée par déplacement du premier coulisseau (508) à l'intérieur du premier support de coulisseau (506),
- la charnière (510) étant reliée à un deuxième support de coulisseau (512) de sorte qu'une position du deuxième support de coulisseau (512) puisse être modifiée par déplacement du premier coulisseau (508) à l'intérieur du premier support de coulisseau (506) et puisse également être modifiée par inclinaison du deuxième support de coulisseau (512) au niveau de la charnière (510),
- le deuxième support de coulisseau (512) étant relié à l'élément de support arrière (514),
- un deuxième coulisseau (516) étant fonctionnellement accouplé au deuxième support de coulisseau (512) de sorte que le deuxième coulisseau (516) puisse coulisser par rapport au deuxième support de coulisseau (512),
- le deuxième coulisseau (516) étant relié à l'élément de support avant (518) de sorte que l'élément de support avant (518) puisse coulisser par rapport à l'élément de support arrière (514).

2. Système selon la revendication 1, **caractérisé en ce que** le système vidéo (104) est réglable en inclinaison et la structure de support (104a) est reliée au système vidéo (104) et mobile avec le système vidéo (104) de sorte qu'un angle de vue du dispositif d'affichage (106) puisse être ajusté par ajustement du système vidéo (104).

3. Système selon la revendication 1, **caractérisé en ce qu'**il comprend en outre un élément de retenue complémentaire, l'élément de retenue complémentaire étant relié à l'un parmi le support de dispositif (110) et le système vidéo (104) séparément du support de dispositif (110), et étant configuré pour retenir le dispositif d'affichage (106) conjointement avec le support de dispositif (110) lorsque le dispositif d'affichage (106) est positionné dans le support de dispositif (110).

4. Système selon la revendication 1, **caractérisé en ce qu'**il comprend en outre un siège d'avion (102), le système vidéo (104) étant relié à un dossier du siège d'avion (102).

5. Système selon la revendication 1, **caractérisé en ce que** :
l'élément de support avant (518) comprend en outre une partie inférieure (534) et une partie supérieure (536), la partie inférieure (534) étant dimensionnée pour permettre la visualisation d'un écran du dispositif d'affichage (106), et la partie supérieure (536) étant disposée de manière à supporter un bord du dispositif d'affichage (106).

6. Système selon la revendication 1, **caractérisé en ce que** le support de dispositif (110) est configuré pour supporter l'un parmi un Smartphone et une tablette informatique.

7. Système selon la revendication 1, **caractérisé en ce que** l'élément de support avant (518) est configuré de manière coulissante par rapport à l'élément de support arrière (514) dans une configuration à ressort de sorte que les éléments de support avant et arrière (514, 518) tendent à générer une force de serrage entre les éléments de support avant et arrière (514, 518) lorsque les éléments de support avant et arrière (514, 518) sont séparés l'un de l'autre.
